# EUROPEAN PATENT SPECIFICATION

(11) **EP 3 523 953 B1**
(45) Date of publication and mention of the grant of the patent: **25.11.2020**
(21) Application number: 16781710.5
(22) Date of filing: 05.10.2016
(51) Int. Cl.: H04M 3/42, H04M 1/725

(54) **FACILITATION FOR A USER WHEN DIALLING**
HILFE FÜR EINEN BENUTZER BEIM WÄHLEN
FACILITATION DE LA COMPOSITION D'UN NUMÉRO DESTINÉE À UN UTILISATEUR

(43) Date of publication of application: 14.08.2019
(73) Proprietor: Löfholm, Håkan Johan, 141 44 Huddinge (SE)
(72) Inventor: Löfholm, Håkan Johan, 141 44 Huddinge (SE)
(74) Representative: Groth & Co. KB
(86) International application number: PCT/EP2016/073767
(87) International publication number: WO 2018/065044

(56) References cited:
- EP-A1- 2 688 273
- US-A1- 2010 329 441

## Description

### TECHNICAL FIELD

The present invention generally relates to facilitating for a user of a mobile device and more particularly to a method performed by a mobile device; a mobile device, a computer program and a carrier, for facilitating for a user when dialling a mobile number or a telephone number belonging i.e. comprised in a list of mobile numbers or telephone numbers.

### BACKGROUND

In today's mobile or radio technologies, the society and technology almost forces a mobile user to make use of mobile services offered for example by a bank, or an insurance company etc. With today's smart phones, there exist applications stores for downloading an application of interest. An example of an application is handling a bank account of the mobile user. Another example of an application is performing tax declaration. Another example of a downloadable application is to find a person or a company that calls or dials the number of the owner of the device in order to facilitate the owner or user of the device to know beforehand who called. Example of application stores can be Play boutique managed by Google ® or App Store managed by Apple ®.

Since more and more companies whether it is a bank or an insurance company, an authority like the police, a hospital, a care centre, an airport etc., are keen to make use of mobile services and the internet to offer their respective customers/users/clients a fast service, a mobile user is almost obliged to make use of its telephone or mobile phone or mobile device in order to take part of the above mentioned services. As an example, a mobile user driving a car gets a problem on the highway and possibly gets injured. The mobile user calls, by means of a mobile device, the insurance company or the hospital or police and often an automatic voice answers the call giving instructions to the user to push a key on the keypad to select the appropriate action to be performed in such a situation. The user then enters or pushes the appropriate key and await for additional instructions and hopefully gets the help he/she needs. For example, the mobile user is requested to push/enter key 9 in case he wishes the instructions to be in another language e.g. in Swedish. After that the mobile user is requested to push/enter on an additional number e.g. key 1 to get in contact with a person. Also sometimes the mobile user is requested to enter his or hers social security number (e.g. "personnummer" as it is called in Sweden) before he or she is instructed to push on e.g. key 1 described above. The scenario above is applicable when contacting an insurance company or a mobile operator or a bank or an institution, where the mobile user is already registered. There are of course many other companies etc. that apply the same principle. This is a kind of harmonization system that facilitates for a calling party (here e.g. a mobile user) when contacting a called party.

Although the solution or method above facilitates for a mobile user to get in touch in an appropriate way with a requested party, there is problem with the above solution or service which involves delays. Another problem is that the service provided by the company or authority etc. maybe is not suitable for the particular situation the user is in when dialling the mobile number or telephone number of the dialled party i.e. the number of the authority or of the company etc.

As an example, the user may be injured and may not be capable to perform in a simple way all the instructions giving to him/he by the dialled party.

There is therefore need for a method, a mobile device, a computer program and a carrier containing the computer program to further reduce delay when contacting a dialled number and for further facilitating for the user of the mobile device to get in contact with the dialled party in a simpler way than what is offered with today's solution.

The documents US 2010/329441 and EP 2 688 273 represent examples of background art. J

### SUMMARY

The present invention provides a method, a mobile device, a computer program and a carrier comprising the computer program for achieving the above.

According to an aspect of embodiments herein there is provided a method comprising: dialling a mobile number or telephone number belonging to a dialled party; querying a database or a server comprising a list of telephone numbers or mobile numbers on whether the dialled mobile or telephone number is comprised in said list; that being the case i.e. if the mobile number or the telephone number is comprised in said list, activating and/or displaying at least a keypad of the mobile device automatically without involving a user of the mobile device; enabling the user to select or push on at least a key of the keypad; wherein the selected or pushed key of the keypad being requested by the dialled party.

According to another aspect of embodiments herein there is provided a mobile device configured to: dial a mobile number or telephone number belonging to a dialled party; query a database or a server comprising a list of telephone numbers or mobile numbers on whether the dialed mobile or telephone number is comprised in said list; and that being the case i.e. if the mobile number or the telephone number is comprised in said list, activate and/or display at least a keypad of the mobile device automatically without involving a user of the mobile device; enabling the user to select or push on at least a key of the keypad; wherein the selected or pushed key of the keypad being requested by the dialled party.

Yet another aspect of embodiments herein, there is provided a computer program comprising instructions which, when executed on at least one processor, cause the at least one processor to carry out the method according to any one of appended claims 1-8 at the end of this application.

Yet another aspect of embodiments herein, there is provided a carrier containing the computer program described above, wherein the carrier is one of an electronic signal, optical signal, radio signal, or computer readable storage medium.

An advantage with the present embodiments is to reduce significantly the delay for a user of a mobile device to get the appropriate help.

Another advantage with the present embodiments is to simplify for the user of the device to get in contact with the dialled party in a faster way than what is offered with today's solution.

Another advantage with the present embodiments is to provide the dialled party (company or authority or hospital etc. to which the dialler party calls) with a service that helps the dialler getting the appropriate help in a faster needed thereby improving the service offered by the dialled party and thus improving the dialler party's experience.

Yet another advantage with the present embodiments is to provide a mobile user with a downloadable application that can easily be installed and started in a mobile device of the user enabling the user to automatically, without involvement of the user i.e. the dialler party, display and/or activate a keypad of the device and optionally automatically activate a speaker of the mobile device enabling the user to not only see the keypad for appropriate action as described above but also hear the dialled party giving information and/or instructions to the mobile user.

Other advantages of the present embodiments will be clear for a reader of this application/invention.

### BRIEF DESCRIPTION OF THE DRAWINGS

Figure 1 is a flow diagram of exemplary embodiments of a method according to the present invention.
Figure 2 is a flow diagram of an exemplary embodiment of a method according to the present invention.
Figure 3 is a block diagram of exemplary embodiments of an apparatus, mobile device, according to the present invention.
Figure 4 is another block diagram of an exemplary embodiment of an apparatus, mobile device, of the present invention.

### DETAILED DESCRIPTION

The present invention relates to facilitating for a user of a mobile device and more particularly to a method performed by a mobile device; a mobile device, a computer program and a carrier, for facilitating for a user when dialling a mobile number or a telephone number belonging i.e. comprised in a list of mobile numbers or telephone numbers.

The mobile number of phone number may be a number to a bank or an authority or an insurance company or any suitable party to which a mobile user can call or dial to and where the dialled party requests by automatic voice or the like the dialler party (the mobile user) to enter/activate or push a key of a keypad of the mobile device of the mobile user.
Several examples illustrative and descriptive will be given below to better understand the invention.

Assuming a mobile user wishes to call to an insurance company for some reason(s). The mobile user selects the telephone number or mobile number of the insurance company from the user's contact list in his mobile device or the user enters by touch or voice the number or name of the insurance company. Entering by touch the number of the insurance company may be performed by use of the keypad of the mobile device. The mobile user may, if his/her mobile device is an advance smart phone, to speak up the name of the insurance company so the mobile device itself dials/calls the insurance company. It is here assumed that the number of the insurance company is comprised in a list or database or server and that the dialler party queries the database or server to check whether the number of the dialled party is comprised in said list. That being the case i.e. the mobile or telephone number is comprised in the list or database or server, the dialled party offers the dialler party with an automatic voice service enabling the dialler party to present options for the dialler party so that the later may select appropriate key or keys depending on what the dialler party request for particular service of the dialled party.

When the insurance company, herein the dialled party, answers the mobile user, herein the dialler party, an automatic voice starts by presenting (though voice) options to select among. For example the voice may say press "1" for coming in contact with the part of the insurance company handling car accidents; or say press "2" for home related insurance questions; or say press "3" for travel related issues etc.
Hence the dialler party need to (actively) select one of the options above, which in this example is "1" or "2" or "3". A selection may be made via voice of the dialler party or by touch of the dialler party.

According to an embodiment herein, at least the keypad of the mobile device of the dialler party is activated and/or displayed. Display of the keypad enable the dialler party to make the selection described above. Hence, without the dialler party activating the keypad, less time it takes for the user to make the selection of the key to be pressed or said. In other words, the keypad is automatically activated and/or displayed without involvement of the dialler party.

According to another embodiment herein, the speaker of the mobile device of the dialler party is simultaneously activated together with the activation of the keypad. Hence, in this embodiment the speaker and the keypad are activated simultaneously. The keypad is displayed and the speaker is activated enabling the user to hear the dialled party e.g. to hear relatively loudly the automatic voice presenting options to select among as described above; and enabling the user to select the key to press. This embodiment further reduces the delay it takes to get the help needed by the insurance company in this example.
Assume for example the dialler party is driving a car and is calling the insurance company. With the present invention according to the embodiment described above, the driver does not need to actively activate the keyboard and the speaker. The driver only needs a 2-step process which includes: 1) dialling (by touch or voice) the number (or name in case of voice) of the insurance company and 2) pressing by the user the selected key of the keypad. Note that activation/display of the keypad may be performed after activation of the speaker. The order is not restrictive to this invention. It is however considered more appropriate to activate/display the keyboard first since the dialler party normally may hear the dialled party. Note however that as described above, in an embodiment, the keyboard is activated/displayed and at the same time or very shortly (after few milliseconds e.g. 1), the speaker is activated.

In another alternative, the speaker is activated after dialling the dialled party and displaying/activation of the keyboard also here preferably simultaneously or after few milliseconds e.g. 1 ms or 2 ms. Hence the present invention is not restricted to the actual order of activation.

Note that pressing the appropriate key or keys of the keypad may be performed via voice or via touch depending on the features supported by the mobile device and selected by the mobile user. Hence a better wording is selecting the key or keys of the keyboard. Selection herein includes pushing (or pressing) the appropriate key or keys or selection includes saying through voice the appropriate key or keys of the keyboard.

Let us demonstrate the advantage(s) achieved by the present embodiments of the present invention by comparing prior art solution with the solution according to the present embodiments:
- in the prior art solution, the process generally involves at least 4 steps. This in case no headset (wired or wireless) is used by the dialler in which case 3 steps are required if a headset is used by the dialler party.
   The four steps are: 1) dial by the dialler party the number (by touch or voice or saying the name of insurance company) of the insurance company; 2) activate by the dialler party the keypad so it is displayed; 3) activate by the dialler party the speaker to better hear the dialled party and 4) press by the dialler party the appropriate key or keys of the keypad.
- In the solution according to embodiments herein and as described above, the process involves two steps namely: 1) dial by the dialler party the number (by touch or voice or saying the name of insurance company) of the insurance company; and 2) press/push or select by the dialler party the the appropriate key or keys of the keypad.
   It is readily demonstrated above that the embodiments herein save at least 2 process steps compared to the prior art solution which means a reduction in delay to reach the dialler party and also facilitate for the dialler party.
   Note also that in the example above when the dialler party is driving the car, the risk for accident is reduced since the driver only needs to select the appropriate key or keys after dialling the number. In the prior art solution, risk for accident is increased since the additional two steps of activating by the driver the keypad and activating by the driver the speaker are needed which leads to less attention of the driver when driving.

Hence the previously described advantages of the embodiments of the invention are fulfilled. The advantages are repeated below:
- An advantage with the present embodiments is to reduce significantly the delay for a user i.e. the dialler party of a mobile device to get the appropriate help.
- Another advantage with the present embodiments is to simplify for the user i.e. the dialler party of the device to get in contact with the dialled party in a faster way than what is offered with today's solution.
- Another advantage with the present embodiments is to provide the dialled party (company or authority or hospital etc. to which the dialler party calls) with a service that helps the dialler getting the appropriate help in a faster needed thereby improving the service offered by the dialled party and thus improving the dialler party's experience.
- Yet another advantage with the present embodiments is to provide a mobile user i.e. the dialler party with a downloadable application that can easily be installed and started in a mobile device of the user enabling the user to automatically, without involvement of the user, display and/or activate a keypad of the device and optionally automatically activate a speaker of the mobile device enabling the user to not only see the keypad for appropriate action as described above but also hear the dialled party giving information and/or instructions to the mobile user.

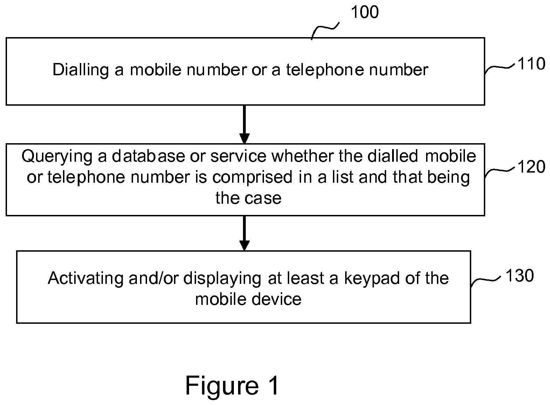

Referring to **Figure 1** there is illustrated exemplary embodiments of a method **100** performed by a mobile device as described earlier. As shown the method comprises:
- dialling **110** a mobile number or telephone number belonging to a dialled party or to a party to whom to dial;
- querying **120** a database or a server comprising a list of telephone numbers or mobile numbers on whether the dialled mobile or telephone number is comprised in said list;
- that being the case i.e. if mobile number or telephone number is comprised in said list,
- activating and/or displaying **130** at least a keypad of the mobile device automatically without involving a user of the mobile device; enabling the user to select or push on at least a key of the keypad; wherein the selected or pushed key of the keypad being requested by the dialled party.

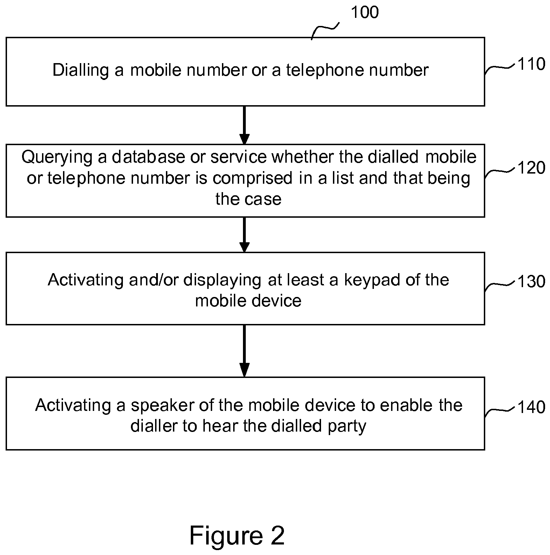

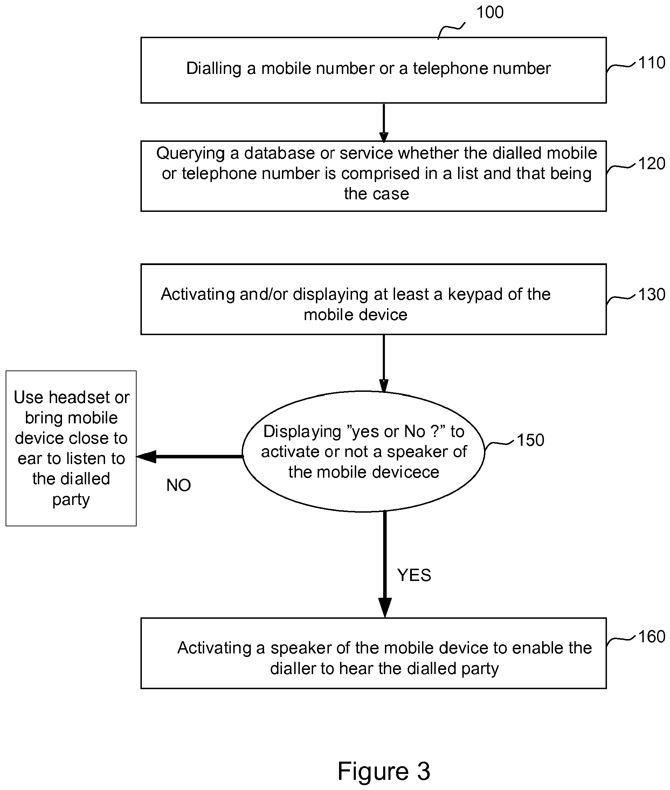

According to an embodiment, activating and/or displaying 130 the at least one keypad further comprising simultaneously activating **140** a speaker of the mobile device enabling the user (dialler party) to hear the dialled party requesting the user of the mobile device to select or push the requested at least one key of the keypad. Method step 140 is shown in **Figure 2** together with the method steps of Figure 1.
According to an embodiment, activating and/or displaying 130 the at least one keypad further comprising displaying **150** to the user options, e.g. yes or no, on whether to activate or not a speaker of the mobile device enabling the user to select whether to hear the dialled party requesting the user of the mobile device to select or push the requested at least one key of the keypad. This embodiment is shown in **Figure 3****.**
According to an embodiment, activating **160** the speaker of the mobile device if the user selects the option "yes" enabling the user to hear the dialled party requesting the user of the mobile device to select or push the requested at least one key of the keypad. This method step is shown in Figure 3. If the user or dialler party selects "no" instead of "yes" the the dialler party may make use of a headset wired or wireless and/or the dialler (or caller) party may bring the mobile device close to the ear to listen in private the dialled (or called) party.

According to an embodiment, selection of the key by the user of the mobile device is performed through voice or through touch of the keypad as previously described. Further according to an embodiment, the method further comprising: following instruction(s) of the dialled party requesting the user of the mobile device to select or push the requested at least one key of the keypad. According to yet another embodiment, the method further comprising: terminating the call generated by the the dialler party of the mobile number or telephone number when the user of the mobile device or the dialled party decides to terminate the call.

The embodiments described above may also apply when receiving a short message service (SMS) e.g. informing the party receiving the SMS that he/she missed a call. The SMS usually includes the number of the the dialled party e.g. 000555 and also sometimes the telephone number or mobile number of the voice mail to dial e.g 123456 in order to listen to missed and saved messages.

Hence in this SMS scenario, assume that he/she dials the number of voice mail 123456, tThe voice mail normally when responding asks the caller to select or push a key for listening to new messages e.g. "1" or stored messages e.g. "2" etc. Hence making use of the embodiments of the present invention herein, the display is activated/shown enabling the dialler to select or push at least one key of the keypad e.g. "1" for new messages or push "2" for saved messages. According to an embodiment as described above, the speaker of the mobile device of the dialler party is also (simultaneously or after some milliseconds) activated enabling the dialler to hear the automatic voice mail. This way it is faster (short delay) to listen to saved or new messages compared to today's solution.

Hence according to an embodiment, the list of telephone numbers or mobile numbers may also include the telephone or mobile number of the voice mail.

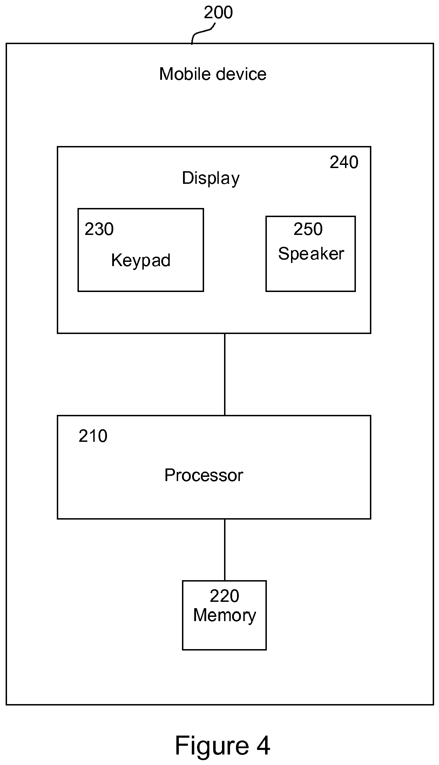

Referring to **Figure 4****,** there is illustrated a block diagram illustrating an apparatus e.g. a mobile device **200** or user equipment according to embodiments herein.
The mobile device 200 is configured to:
- dial a mobile number or telephone number belonging to a dialled party or a party to whom to dial;
- query a database or a server comprising a list of telephone numbers or mobile numbers on whether the dialled mobile or telephone number is comprised in said list; and
- that being the case i.e. if mobile number or telephone number is comprised in said list,
- activate and/or display at least a keypad of the mobile device automatically without involving a user of the mobile device; enabling the user to select or push on at least a key of the keypad; wherein the selected or pushed key of the keypad being requested by the dialled party.

The mobile device **200** is configured to activate and/or display the at least one keypad and is further configured to simultaneously activate a speaker of the mobile device enabling the user to hear the dialled party requesting the user of the mobile device to select or push the requested at least one key of the keypad.
The mobile device 200 is configured to activate and/or display the at least one keypad further comprises the mobile device configured to display to the user options, e.g. yes or no, on whether to activate or not a speaker of the mobile device enabling the user to select whether to hear the dialled party requesting the user of the mobile device to select or push the requested at least one key of the keypad.

The mobile device 200 is further configured to activate the speaker of mobile device if the user selects the option yes enabling the user to hear the dialled party requesting the user of the mobile device to select or push the requested at least one key of the keypad.

The mobile device 200, wherein selection of the key by the user or dialler party of the mobile device is performed through voice or through touch of the keypad.

The mobile device 200 is further configured to follow instruction(s) of the dialled party requesting the user of the mobile device to select or push the requested at least one key of the keypad. The mobile device 200 is further configured to terminate the call generated by the the dialler of the mobile number or telephone number when the user of the mobile device or the dialled party decides to terminate the call.

As shown in Figure 4, the mobile device 200 comprises a processor **210** and a memory **220,** said memory 220 containing instructions executable by said processor 210 whereby said mobile device 200 is operative to:
- dial a mobile number or telephone number belonging to a dialled party;
- query a database or a server comprising a list of telephone numbers or mobile numbers whether the dialled mobile or telephone number is comprised in said list; and
- that being the case i.e. if mobile number or telephone number is comprised in said list,
- activate and/or display at least a keypad 230 of the mobile device automatically without involving a user of the mobile device; enabling the user to select or push on at least a key of the keypad; wherein the selected or pushed key of the keypad being requested by the dialled party. As shown, the mobile device 200 further comprises a display 240 which is used to display the keypad 230 and the speaker 250. Here it is considered that the device 200 may be a smartphone with a touch screen. However, the speaker and/or the keypad are not necessarily part of the display 240. Figure 4 is only an example. In another example the display may be separate from the speaker and the keypad and instead connected to the display. All the components are connected to the processor 210 or processor module as shown.

According to yet another embodiment, a carrier containing the computer program above wherein the carrier is one of an electronic signal, optical signal, radio signal, or computer readable storage medium.

In more details, the embodiments herein may be implemented through one or more processors or processing units e.g. processing circuit or unit like processor 210 of Figure 4 of e.g. mobile device 200 together with a computer program code for performing the functions and/or method steps of the embodiments. For example, a computer program comprising instructions which, when executed on at least one processor, cause the at least one processor to carry out the method performed by the mobile device 300 as described earlier and in conjunction with figures 1 and/or figure 2 and/or 3 and presented in the appended method claims.

It should be noted that the embodiments herein may be applicable is any system be it second generation (2G); third generation (3G), fourth generation (4G or LTE (Long Term Evolution)); Wifi or WLAN (Wireless Local Area Network); WiMax, CDMA 2000 etc. Hence the solution presented herein is not restricted to any particular mobile system.

It should be mention that the different components of the mobile device 200 may be modules e.g. a keypad module 230; a speaker module 250; a processor module 210; a memory module 220; a display module 240. Other components modules are also present but not shown. For example, an antenna, a receiver/transmitter/transceiver etc. Hence the mobile device 200 is not restricted to only the components shown in the figure 4.

The foregoing description of the exemplary embodiment of the present invention has been presented only for the purpose of illustrations and description and is not intended to limit the invention in the form described. Alternative modifications will become apparent to those skilled in the art to which the present invention pertains without departing from its scope, the Scope of the present invention is defined by the appended claims rather than the foregoing description and exemplary embodiments described therein.

## Claims

1. A method (100) performed by a mobile device (200); the method comprising:
- dialling (110) a mobile number or telephone number belonging to a dialled party or to whom to dial;
- querying (120) a database or a server comprising a list of telephone numbers or mobile numbers on whether the dialled mobile or telephone number is comprised in said list;
- if mobile number or telephone number is comprised in said list,
the method **characterized by**:
- activating and/or displaying (130) at least a keypad of the mobile device automatically without involving a user of the mobile device and simultaneously activating (140) a speaker of the mobile device; wherein activating and/or displaying (130) the keypad enables the user to select or push on at least a key of the keypad; wherein the selected or pushed key of the keypad being requested by the dialled party, and wherein simultaneously activating (140) the speaker enables the user to hear the dialled party requesting the user of the mobile device to select or push the requested at least one key of the keypad.

2. The method according to claim 1 wherein selection of the key by the user of the mobile device is performed through voice or through touch of the keypad.

3. The method according to anyone of the preceding claims further comprising terminating the call generated by the dialler party of the mobile number or telephone number when the user of the mobile device or the dialled party decides to terminate the call.

4. A mobile device (200) configured to:
- dial a mobile number or telephone number belonging to a dialled party or to whom to dial;
- query a database or a server comprising a list of telephone numbers or mobile numbers on whether the dialled mobile or telephone number is comprised in said list; and
- if mobile number or telephone number is comprised in said list,
**characterized in that** the mobile device is configured to:
- activate and/or display at least a keypad of the mobile device automatically without involving a user of the mobile device; and simultaneously activating (140) a speaker of the mobile device; wherein activating and/or displaying (130) the keypad enables the user to select or push on at least a key of the keypad; wherein the selected or pushed key of the keypad being requested by the dialled party; and wherein simultaneously activating (140) the speaker enables the user to hear the dialled party requesting the user of the mobile device to select or push the requested at least one key of the keypad

5. The mobile device according to claim 4 wherein selection of the key by the user of the mobile device is performed through voice or through touch of the keypad.

6. The mobile device according to anyone of claims 4-5 is further configured to terminate the call generated by the dialler of the mobile number or telephone number when the user of the mobile device or the dialled party decides to terminate the call.

7. A Computer program, comprising instructions which, when executed on at least one processor, cause the at least one processor to carry out the method according to any one of claims 1-3.

8. A carrier containing the computer program of the previous claim 7, wherein the carrier is one of an electronic signal, optical signal, radio signal, or computer readable storage medium.

## Patentansprüche

1. Verfahren (100), durchgeführt durch eine Mobilvorrichtung (200), das Verfahren umfassend:
- Wählen (110) einer Mobiltelefonnummer oder Telefonnummer, die zu einem gewählten Teilnehmer oder demjenigen, der gewählt werden soll, gehört;
- Abfragen (120) einer Datenbank oder eines Servers, umfassend eine Liste von Telefonnummern oder Mobiltelefonnummern, ob die gewählte Mobiltelefon- oder Telefonnummer in der Liste enthalten ist;
- wenn die Mobiltelefonnummer oder Telefonnummer in der Liste enthalten ist, das Verfahren **gekennzeichnet durch**:
- Aktivieren und/oder Anzeigen (130) mindestens eines Tastenfelds der Mobilvorrichtung automatisch ohne Involvieren eines Benutzers der Mobilvorrichtung und gleichzeitiges Aktivieren (140) eines Lautsprechers der Mobilvorrichtung; wobei Aktivieren und/oder Anzeigen (130) des Tastenfelds den Benutzer in die Lage versetzt, mindestens eine Taste des Tastenfelds zu drücken oder auszuwählen; wobei die ausgewählte oder gedrückte Taste des Tastenfelds durch den gewählten Teilnehmer angefordert wird und wobei gleichzeitiges Aktivieren (140) des Lautsprechers den Benutzer in die Lage versetzt, zu hören, dass der gewählte Teilnehmer den Benutzer der Mobilvorrichtung auffordert, die angeforderte mindestens eine Taste des Tastenfelds auszuwählen oder zu drücken.

2. Verfahren nach Anspruch 1, wobei Auswählen der Taste durch den Benutzer der Mobilvorrichtung durch Sprache oder durch Berührung des Tastenfelds durchgeführt wird.

3. Verfahren nach einem der vorstehenden Ansprüche, ferner umfassend Beenden des durch den wählenden Teilnehmer der Mobiltelefonnummer oder Telefonnummer erzeugten Anrufs, wenn der Benutzer der Mobilvorrichtung oder der gewählte Teilnehmer sich entscheidet, den Anruf zu beenden.

4. Mobilvorrichtung (200), konfiguriert zum:
- Wählen einer Mobiltelefonnummer oder Telefonnummer, die zu einem gewählten Teilnehmer oder demjenigen, der gewählt werden soll, gehört;
- Abfragen einer Datenbank oder eines Servers, umfassend eine Liste von Telefonnummern oder Mobiltelefonnummern, ob die gewählte Mobiltelefon- oder Telefonnummer in der Liste enthalten ist; und
- wenn die Mobiltelefonnummer oder Telefonnummer in der Liste enthalten ist, **dadurch gekennzeichnet, dass** die Mobilvorrichtung konfiguriert ist zum:
- Aktivieren und/oder Anzeigen mindestens eines Tastenfelds der Mobilvorrichtung automatisch ohne Involvieren eines Benutzers der Mobilvorrichtung; und gleichzeitiges Aktivieren (140) eines Lautsprechers der Mobilvorrichtung; wobei Aktivieren und/oder Anzeigen (130) des Tastenfelds den Benutzer in die Lage versetzt, mindestens eine Taste des Tastenfelds zu drücken oder auszuwählen; wobei die ausgewählte oder gedrückte Taste des Tastenfelds durch den gewählten Teilnehmer angefordert wird; und wobei gleichzeitiges Aktivieren (140) des Lautsprechers den Benutzer in die Lage versetzt, zu hören, dass der gewählte Teilnehmer den Benutzer der Mobilvorrichtung auffordert, die angeforderte mindestens eine Taste des Tastenfelds auszuwählen oder zu drücken.

5. Mobilvorrichtung nach Anspruch 4, wobei Auswählen der Taste durch den Benutzer der Mobilvorrichtung durch Sprache oder durch Berührung des Tastenfelds durchgeführt wird.

6. Mobilvorrichtung nach einem der Ansprüche 4-5, ferner konfiguriert zum Beenden des durch den wählenden Teilnehmer der Mobiltelefonnummer oder Telefonnummer erzeugten Anrufs, wenn der Benutzer der Mobilvorrichtung oder der gewählte Teilnehmer sich entscheidet, den Anruf zu beenden.

7. Computerprogramm, umfassend Anweisungen, die, wenn sie in mindestens einem Prozessor ausgeführt werden, bewirken, dass der mindestens eine Prozessor das Verfahren nach einem der Ansprüche 1-3 ausführt.

8. Träger, enthaltend das Computerprogramm des vorherigen Anspruchs 7, wobei der Träger eines eines elektronischen Signals, eines optischen Signals, eines Funksignals oder eines computerlesbaren Speichermediums ist.

## Revendications

1. Procédé (100) réalisé par un dispositif mobile (200) ; le procédé comprenant :
- la composition (110) d'un numéro de mobile ou d'un numéro de téléphone appartenant à une partie appelée ou à appeler ;
- l'interrogation (120) d'une base de données ou d'un serveur comprenant une liste de numéros de téléphone ou de numéros de mobile pour savoir si le numéro de mobile ou de téléphone composé est compris ou non dans ladite liste ;
- si le numéro de mobile ou le numéro de téléphone est compris dans ladite liste,
le procédé étant **caractérisé par** :
- l'activation et/ou l'affichage (130) automatique d'au moins un clavier du dispositif mobile sans impliquer un utilisateur du dispositif mobile et l'activation simultanée (140) d'un haut-parleur du dispositif mobile ; dans lequel l'activation et/ou l'affichage (130) du clavier permet à l'utilisateur de sélectionner ou de presser une touche du clavier, la touche sélectionnée ou pressée du clavier étant demandée par la partie appelée, et dans lequel l'activation simultanée (140) du haut-parleur permet à l'utilisateur d'entendre la partie appelée demander à l'utilisateur du dispositif mobile de sélectionner ou de presser l'au moins une touche demandée du clavier.

2. Procédé selon la revendication 1 dans lequel la sélection de la touche par l'utilisateur du dispositif mobile est réalisée par la voix ou par le toucher du pavé tactile.

3. Procédé selon l'une quelconque des revendications précédentes comprenant en outre la terminaison de l'appel généré par la partie appelante du numéro mobile ou du numéro de téléphone quand l'utilisateur du dispositif mobile ou la partie appelée décide de mettre un terme à l'appel.

4. Dispositif mobile (200) configuré pour :
- composer un numéro de mobile ou un numéro de téléphone appartenant à une partie appelée ou à appeler ;
- interroger une base de données ou un serveur comprenant une liste de numéros de téléphone ou de numéros de mobile pour savoir si le numéro de mobile ou de téléphone composé est compris ou non dans ladite liste ;
- si le numéro de mobile ou le numéro de téléphone est compris dans ladite liste ;
**caractérisé en ce que** le dispositif mobile est configuré pour :
- activer et/ou afficher automatiquement au moins un clavier du dispositif mobile sans impliquer un utilisateur du dispositif mobile ; et activer simultanément (140) un haut-parleur du dispositif mobile ; dans lequel l'activation et/ou l'affichage (130) du clavier permet à l'utilisateur de sélectionner ou de presser une touche du clavier, la touche sélectionnée ou pressée du clavier étant demandée par la partie appelée ; et dans lequel l'activation simultanée (140) du haut-parleur permet à l'utilisateur d'entendre la partie appelée demander à l'utilisateur du dispositif mobile de sélectionner ou de presser l'au moins une touche demandée du clavier.

5. Dispositif mobile selon la revendication 4 dans lequel la sélection de la touche par l'utilisateur du dispositif mobile est réalisée par la voix ou par le toucher du clavier.

6. Dispositif mobile selon l'une quelconque des revendications 4 à 5 configuré en outre pour mettre un terme à l'appel généré par l'appelant du numéro mobile ou du numéro de téléphone quand l'utilisateur du dispositif mobile ou la partie appelée décide de mettre un terme à l'appel.

7. Programme informatique, comprenant des instructions qui, à leur exécution sur au moins un processeur, amènent l'au moins un processeur à mettre en œuvre le procédé selon l'une quelconque des revendications 1 à 3.

8. Support contenant le programme informatique de la revendication précédente 7, le support étant l'un d'un signal électronique, d'un signal optique, d'un signal radio ou d'un support de mémorisation lisible par ordinateur.
